**Europäisches Patentamt**

**European Patent Office**

**Office européen des brevets**

(19)

(11) Publication number: **0 066 052**
**A1**

(12) **EUROPEAN PATENT APPLICATION**

(21) Application number: **82102513.7**

(22) Date of filing: **25.03.82**

(51) Int. Cl.³: **G 06 F 15/20**

(30) Priority: **18.05.81 US 264612**

(43) Date of publication of application:
**08.12.82 Bulletin 82/49**

(84) Designated Contracting States:
**DE FR GB IT**

(71) Applicant: **International Business Machines Corporation**

**Armonk, N.Y. 10504(US)**

(72) Inventor: **Elliot, Jo Ann**
**11403 Barrington Way**
**Austin Texas 78759(US)**

(72) Inventor: **McInroy, John Wise**
**2108 Woodmont Avenue**
**Austin Texas 78703(US)**

(72) Inventor: **Waldo, Paul David**
**1209 Quail Park**
**Austin Texas 78758(US)**

(72) Inventor: **White, Freddie Roy**
**Route 2 Box 33**
**Georgetown Texas 78626(US)**

(74) Representative: **Bonneau, Gérard**
**COMPAGNIE IBM FRANCE Département de Propriété Industrielle**
**F-06610 La Gaude(FR)**

(54) **Method for preparing an arithmetic entry in an information processing system.**

㊗ A method for preparing an arithmetic entry in an information processing system consisting in storing an arithmetic menu including at least an answer item and one or more operand items, displaying a list of the items (34), displaying a selected parameter (36) for each of the displayed items (34) wherein each displayed selected parameter (36) is proximate the corresponding displayed item, and displaying in a horizontal format (40) a plurality of arithmetic elements corresponding respectively to the selected parameters wherein the displayed arithmetic elements illustrate a mathematical relationship between the answer item and the operand items.

./...

# FIG. 3

DISKOI |_____|_____|_____|_____|Kyb  I   |_____

ARITHMETIC  _36_

34

| ID | ITEM | YOUR CHOICE | POSSIBLE CHOICES |
|----|------|-------------|------------------|
| a | Answer | Annual_Interest | Name of a Variable |
| b | Operand | Principal_Amount | Name of a Variable, or a Number |
| c | Operation | 3 | 1 = Plus (+)  2 = Minus (-)<br>3 = Times (*)  4 = Divided by (/) |
| d | Operand | Rate | Name of a Variable, or a Number |

........a ........ =  .......b......... c .........d........   } 40

Let Annual_Interest  = Principal_Amount * Rate

Type ID letter to choose ITEM; press ENTER:■   } 42

## METHOD FOR PREPARING AN ARITHMETIC ENTRY
## IN AN INFORMATION PROCESSING SYSTEM

### Description

The present invention pertains word and data base processing systems which have a display and a keyboard for receiving operator inputs, and in particular to a method for preparing an arithmetic entry in an information processing system.

The first word processing systems were developed solely for the purpose of handling simple text editing. However, information processing systems are now being developed which combine the tasks of word processing together with extensive data base operations. The combination of such operations greatly increases the useful scope of operation for information processing.

As greater functions are added over and above straightforward text editing, the execution and entry of these more complex tasks become more difficult. It is therefore necessary that methods be developed to make the execution of complex functions as simple as possible while providing the operator with properly formated information to insure that the functions are being properly carried out. In particular there exists a need for a method to guide the operator in the preparation of mathematical functions which are incorporated into word processing and data base operations.

The present invention comprises a method for preparing an arithmetic entry for use in an information processing system which includes a display screen, a keyboard and a main store such as a diskette storage. The method begins with the step of storing in the main store an arithmetic menu which includes an answer item, one or more operand items and optionally a mathematical operation item. In response to a command received from the keyboard a list of the items is displayed on the screen. Also displayed on the screen is a selected parameter for each of the displayed items wherein each displayed selected parameter is located proximate the corresponding displayed item. The displaying of the selected parameters is carried out in response to a command and parameter information received from the keyboard. Finally, in response to receipt of the parameter information there is displayed on the screen in a horizontal format a plurality of arithmetic elements, the arithmetic elements corresponding respectively to the selected parameters wherein the displayed arithmetic elements illustrate a mathematical relationship between the answer item and the operand items. The information thus displayed on the screen includes the arithmetic entry for use in the information processing system.

A more detailed description of the invention is given below, with reference to the following drawings.

Figure 1 is a perspective view of an information processing system made up of a terminal and a storage unit.

Figure 2 is a logical flow diagram showing the functional operation of the present invention; and

Figure 3 is a illustration of a screen display produced by operation of the present invention.

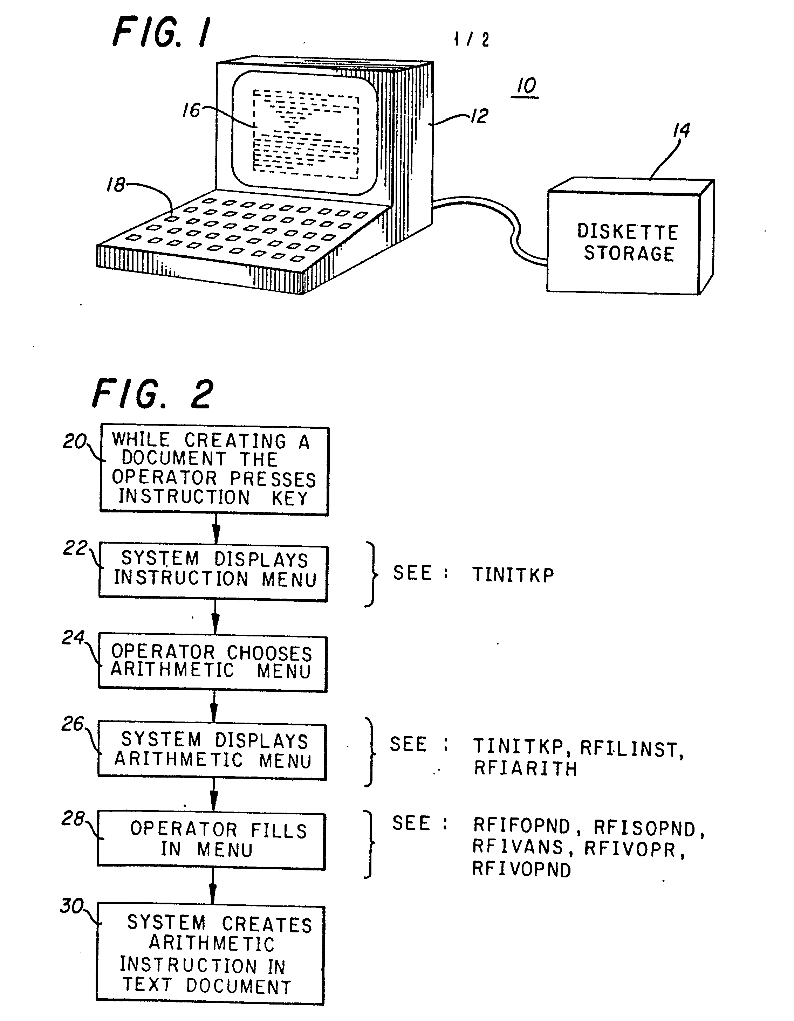

Referring now to figure 1 there is illustrated an information processing system 10 which comprises a terminal 12 connected to a diskette storage unit 14. Terminal 12 connected to a diskette storage unit 14. Terminal 12 has a display screen 16 and a keyboard 18. Through operation of the keyboard 18 an operator can enter commands to terminal 12 to cause information to be transferred between terminal 12 and the diskette storage 14. The operator can further enter alphanumeric characters and commands for control of the display on screen 16.

A typical task which utilizes the present invention is now described with reference to figure 1. In a preparatory step an arithmetic menu is stored on the diskette storage 14. This arithmetic menu corresponds to one or more mathematical functions. It is made up of a plurality of items including at least an answer item, one or more operand items and optionally a mathematical operation item. This arithmetic menu can be displayed on screen 16 in response to the operator entering a command through keyboard 18.

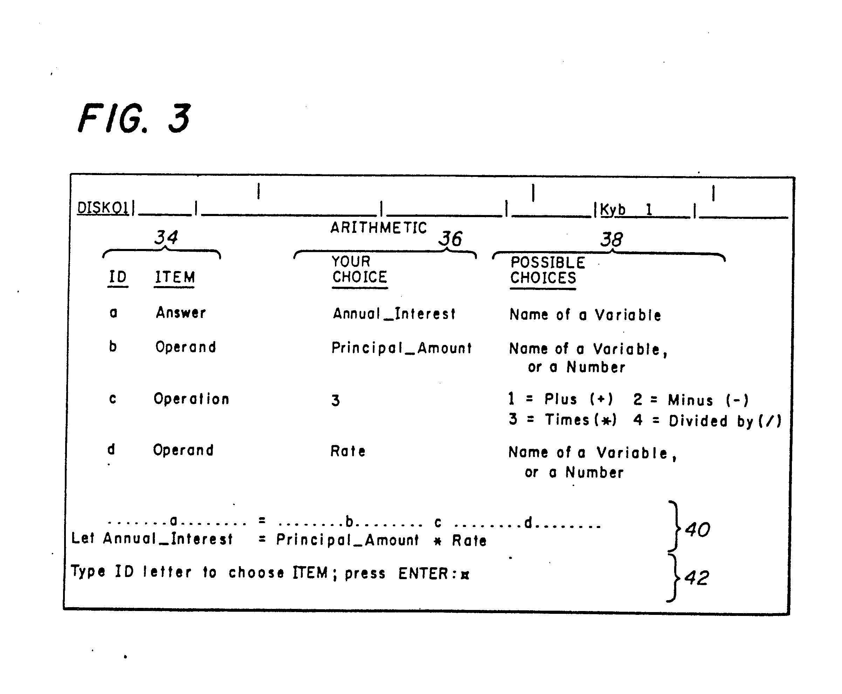

The operator has the task of preparing a document which includes a mathematical function. A document shell can be read from storage 14 and displayed on screen 16 and the operator can enter the unique elements into the document or the operator can create the document. When the operator reaches the portion of the document which requires reference to the mathematical function, the operator enters a command to retrieve the arithmetic menu from the diskette storage 14. This arithmetic menu is then displayed on screen 16. An example of such an arithmetic menu is illustrated in figure 3.
The operator then enters appropriate parameters, which must include the name of the variable that will be assigned the value of the answer during subsequent computation. The answer variable name and any other pertinent parameters are then merged into the previously prepared document to produce a finalized document which can then be stored or printed.

A logical flow of he above task is illustrated in figure 2. Referring to figure 2 there are included references to specified pseudocode listings which define in detail the implementation of certain steps in the operational process. These pseudocode listings are provided below following the operational description of the invention.

In logical step 20 the operator is in the process of creating a document and encounters the requirement for a particular type of menu. The operator then presses the "instruction" key. In response to the "instruction" key in step 22 the system 10 displays an instruction menu listing a plurality of available instructions. In logic step 24 the operator chooses an "arithmetic" menu to perform a mathematical function as required by the document in progress.

Further referring to figure 2 in response to the request for an "arithmetic" menu, in step 26 the system 10 displays the "arithmetic" menu which was previously prepared and stored in diskette storage 14. This arithmetic menu is illustrated in figure 3 where it is illustrated after it has been filled in by the operator. The step of inputting selected parameters is defined by logic step 28.

The first column of the menu is located under the bracket 34. This includes a listing of the items in the menu together with an identification code for each item. A second column is located under bracket 36. This indicates to the operator the choice of a selected parameter which corresponds to the item on the same horizontal line.

A third column under bracket 38 lists the possible choices for each of the selected parameters in the menu. In the menu shown in figure 3 the mathematical relationship example is the calculation of interest as an answer based upon principal and rate as operands. A mathematical operation of multiplication is provided between the principal and rate.

Further referring to figure 3 there is included an equation line as indicated by the bracket 40. A bracket 42 indicates the location of a line which provides operator instructions for completing the arithmetic menu.

To fill in the menu shown in figure 3 the operator presses the identification letter for the item desired then the ENTER key. The operator then types in a selected parameter for the selected item. The operator again depresses the ENTER key. This process is repeated until all of the selected parameters are entered for the corresponding items. A final null ENTER terminates the menu.

The items entered by the operator are displayed in the column located by the bracket 36. As the operator enters each of the selected parameters the parameter or symbol corresponding thereto is at the same time entered into a space in the equation line beside bracket 40. The equation line is made up of a plurality of arithmetic elements. For the answer and the operands the selected parameters entered by the operator are the same as the arithmetic elements in the equation. But for the mathematical operation there will be a symbol displayed in the equation line while an option number is displayed in the column beneath bracket 36. In the example shown in figure 3 the mathematical option 3 was selected and in the equation line an "$\overset{\ast}{=}$" is displayed.

As can be seen from the above description the equation line will be filled in at the same time that the operator is entering the parameters for the mathematical function. The completion of the equation line shows the operator that the proper terms are being entered into the arithmetical menu and that the proper mathematical function is being utilized. This simplifies the entry of the mathematical function for the operator and provides a feedback to the operator to show that the operation has been correctly accomplished.

Referring now to figure 2, in a final logical step 30 the system 10 utilizes the arithmetic entry which was produced in the above steps and incorporates this entry into the document which was previously produced by the operator.

In numerous cases mentioned above the operator enters commands to the keyboard 18. Each of these commands can comprise either a single or a plurality of keystrokes.

The pseudocode listings noted in figure 2 are illustrated below in programming language. The application and use of

6

spseudocode is described in "An introduction to Programming", (A Structural Approach Using PL/1 and PL/C-7), 2nd Edition, by Richard Conway and David Gries, Winthrop Publishers, Cambridge, Mass., copyright 1975.

```
BEGIN (TINITKP)

1.    MOVE CURSOR TO VALID INSERTION POSITION
1.    IF NO DISK ERRORS THEN
2.    . TERMINATE TSB CHANGE
2.    . IF TSB TERMINATION SUCCESSFUL THEN
3.    . . OBTAIN MENY MANAGER STORAGE
3.    . . UNTIL THE INSTRUCTION MENU IS
                ENTERED OR CANCELLED DO
4.    . . . IF INSTRUCTION KEY PRESSED THEN
5.    . . . . PUT UP THE INSTRUCTION MENU
5.    . . . . IF NO OPTION SELECTED THEN
6.    . . . . . SET 'CANCELLED' FLAG
5.    . . . . ENDIT
4.    . . . ELSE
5.    . . . . LOAD VARIABLE XLATION VALUE
4.    . . . ENDIF
4.    . . . IF 'CANCELLED' FLAG NOT SET THEN
5.    . . . . OBTAIN INSTRUCTION STORAGE
5.    . . . . INITIALIZE INSTRUCTION CB
5.    . . . . INVOKE SPECIFIC INSTR HANDLER (RFILINST)
5.    . . . . IF INSTRUCTION WAS CREATED THEN
6.    . . . . . INSERT INSTRUCTION IN TEXT
5.    . . . . ENDIF
5.    . . . . RECOVER INSTRUCTION STORAGE SIZE
5.    . . . . FREE INSTR WB & CB STORAGE AREA
4.    . . . ENDIF
4.    . . . CHECK WHETHER WE SHOULD REDISPLAY
                THE INSTRUCTION MENU
3.    . . ENDDO
3.    . . RELEASE MENU MANAGER STORAGE
3.    . . IF NO TSB ERRORS THEN
```

```
4.    . . . REDISPLAY TEXT VIEWPORT
4.    . . . REDISPLAY ORIGINAL PROMPT REQUEST MFI
3.    . . ENDIF
2.    . ENDIF
1.    ENDIF
1.    RETURN
END (TINITKP)
```

PSEUDOCODE LISTING #1

```
BEGIN RFILINST (FILES INSTRUCTIONS CONTROLLER)
1.    GET FILES INSTRUCTION CONTROL BLOCK SPACE
1.    GET ADDRESSIBILITY TO TICB
1.    CREATE LOCAL STORAGE
1.    SEARCH TABLE 1 FOR ENTRY CORRESPONDING TO
          INSTRUCTION ID
1.    MOVE SFD ADDRESS TO RFICB
1.    IF CREATE MODE (TICBCRTN) THEN
2.    . INSERT '2B' AND INSTRUCTION CLASS INTO
          SKELETON IN FICB
3.    . INSERT CHARACTER SET ID/CODEPAGE ID
          PARAMETER LENGTH AND TYPE BYTES INTO
          SKELETON IN RFICB
1.    ELSE (EDIT MODE)
2.    . SET RFICB PARAMETERS
1.    ENDIF (CREATE/EDIT MODE)
1.    SET RETURN CODE TO SUCCESSFUL (RFICBRTC)
1.    UNTIL (MENU RETURN CODE IS OTHER THAN
          CANCEL WITH CHANGE) DO
2.    . INVOKE CSECT TO SET UP DFD'S AND
          CURRENT VALUE POINTERS FOR THE MENU
          MANAGER AND DECODE EXISTING
          INSTRUCTION, IF ANY (RFIARITH)
2.    . IF INVALID RESPONSE FLAG NOT SET THEN
3.    . . CLEAR END-CURRENT-MENU FLAG
          (RFICBECM)
3.    . . UNTIL END-CURRENT-MENU FLAG
          (RFICBECM) SET DO
```

4.     . . . INVOKE MENU MANAGER TO BUILD MENU
                USING PARAMETERS IN RFICB AND
                TEXT INSTRUCTION CONTROL BLOCK
                (MENU)
4.     . . . IF MENU TERMINATED WITH ENTER THEN
5.     . . . . INVOKE CSECT (RFIARITH) TO BUILD
                INSTRUCTION AND INSERT IT INTO
                BUFFER (MAY OR MAY NOT SET
                END-CURRENT-MENU FLAG)
4.     . . . ELSE (CANCEL WITH OR WITHOUT CHANGE)
5.     . . . . SET END-CURRENT-MENU FLAG (RFICBECM)
5.     . . . . IF CANCELLED WITHOUT CHANGE THEN
6.     . . . . . SET RETURN CODE TO 'CANCELLED;
                    NO INSTRUCTION IN BUFFER'
                    (RFICBRTC)
5.     . . . . ENDIF (CANCELLED WITHOUT CHANGE)
4.     . . . ENDIF (ENTER)
3.     . . ENDDO (UNTIL END-CURRENT-MENU FLAG SET)
2.     . ELSE (INVALID RESPONSE FLAG SET)
3.     . . EXIT THIS CSECT
3.     . . RESET INVALID RESPONSE FLAG
2.     . ENDIF (INVALID RESPONSE FLAG)
1.     ENDDO (UNTIL NOT RETURNING TO ORIGINAL MENU)
1.     WRAPUP
1.     SET RETURN CODE IN AX (RFICBRTC)
1.     RETURN TO CALLER
END RFILINST (FILES INSTRUCTIONS)
                PSEUDOCODE LISTING #2


BEGIN RFIARITH (ARITHMETIC INSTRUCTION)
1.     CREATE LOCAL STORAGE
2.     IF (FUNCTION CODE = SET UP FOR MENU MANAGER)
                THEN
2.     . COPY DFD INTO DFD WORSKSPACE (TICBDFDP)
2.     . PLACE MFI # IN RFICB (RFICBMFI)
2.     . SET DFD CURRENT VALUE POINTERS
2.     . IF IN EDIT MODE (TICBREVN) THEN

3. . . SAVE CHARACTER-SET-ID AND CODEPAGE-ID
        OF INSTRUCTION BEING EDITED

3. . . DECODE PARAMETERS IN INSTRUCTION BUFFER
        (TICBWORK)

2. . ENDIF (EDIT MODE)

1. ELSE (FUNCTION CODE = BUILD INSTRUCTION
        IN BUFFER

2. . IF ANSWER WAS NOT SPECIFIED

3. . . SET INCORRECT STATE FLAG IN ANSWER DFD

2. . ELSE (ANSWER SPECIFIED)

3. . . SET BIT PATTERN OF SELECTED
        PARAMETERS BY SCANNING DFD CURRENT
        VALUES

3. . . IF BIT PATTERN IS NOT VALID THEN

4. . . . SET INCORRECT STATE FLAG(S° IN
            APPROPRIATE DFD(S°

3. . . ELSE (VALID COMBINATION)

4. . . . BUILD INSTRUCTION IN BUFFER
            (TICBWORK)

4. . . . SET END CURRENT MENU FLAG

4. . . . PLACE LENGTH OF INSTRUCTION IN TICB

3. . . ENDIF (VALID/INVALID COMBINATION)

2. . . ENDIF (ANSWER SPECIFIED)

1. ENDIF (BUILD INSTURCTION IN BUFFER)

1. SET RETURN CODE

1. RETURN TO CALLER

1. BGNPROC STOREM (STORE CURRENT VALUE
        POINTERS IN DFD)

2. . STORE CURRENT VALUE POINTERS FOR "YOUR
        CHOICE" OPTION

2. . STORE CURRENT VALUE POINTERS FOR
        "EQUATION" OPTION

1. ENDPROC STOREM (STORE CURRENT VALUE
        POINTERS IN DFDS)

1. BGNPROC STORECV (STORE CURRENT VALUES IN
        DFDS)

2. . STORE LENGTH OF ITEM, CHARACTER SET ID,

AND CODEPAGE ID IN "YOUR CHOISE" DFD

2. . MOVE ITEM FROM INSTRUCTION BUFFER TO
         DFD CURRENT VALUE

2. . STORE LENGTH, CHARACTER SET ID, AND
         CODEPAGE ID IN "EQUATION" DFD

1. ENDPROC STORECV (STORE CURRENT VALUES IN
         DFDS

1. BGNPROC INSERT (INSERT OPERAND OR
         OPERATOR INTO INSTRUCTION BUFFER)

2. . IF ITEM IS SPECIFIED THEN

3. . . UPDATE LENGTH OF EXPRESSION
             PARAMETER

3. . . MOVE CURRENT VALUE TO INSTRUCTION
             BUFFER

3. . . INSERT ONE BLANK SPACE

2. . ENDIF

1. ENDPROC INSERT (INSERT OPERAND OR
         OPERATOR INTO INSTRUCTION BUFFER

END RFIARITH (ARITHMETIC INSTRUCTION)

PSEUDOCODE LISTING #3


BEGIN RFIFOPND (VERIFY FIRST ARITHMETIC
     OPERAND SYNTAX)

1. VERIFY SYNTAX OF ARITHMETIC OPERAND
         (RFIVOPND)

1. PASS RETURN CODE BACK TO CALLER

1. RETURN TO CALLER

END RFIFOPND (VERIFY SECOND ARITHMETIC
     OPERAND SYNTAX)

PSEUDOCODE LISTING #4


BEING RFISOPND (VERIFY SYNTAX OF SECOND
     ARITHMETIC OPERAND)

1. VERIFY SYNTAX OF ARITHMETIC OPERAND
         (RFIVOPND)

1. PASS RETURN CODE BACK TO CALLER

1. RETURN TO CALLER

END RFISOPND (VERIFY SYNTAX OF SECOND
        ARITHMETIC OPERAND)
            PSEUDOCODE LISTING #5


BEGIN RFIVANS (VERIFY SYNTAX OF ANSWER IN
    ARITHMETIC MENU)
1.   VERIFY THE SYNTAX OF A SET-SYMBOL
1.   BEGIN
2.   . LOCATE OPERATOR INPUT (RFIFINDI)
2.   . SAVE LENGTH OF OPERATOR INPUT
            (INCLUDING SCG)
2.   . VERIFY SYNTAX (TINVARV)
2.   . ADJUST STACK
1.   END
1.   IF SYNTAX IS VALID THEN
2.   . UPDATE CORRESPONDING DFD FOR EQUATION
            LINE ANSWER
1.   ENDIF
1.   PASS RETURN CODE BACK TO CALLER
1.   RETURN TO CALLER
END RFIVANS (VERIFY SYNTAX OF ANSWER IN
            ARITHMETIC MENU)
            PSEUDOCODE LISTING #6


BEING RFIVOPR (VERIFY SYNTAX OF OPERATOR
        IN ARITHMETIC MENU
1.   LOCATE OPERATOR INPUT (RFIFINDI)
1.   SET INVALID-SYNTAX RETURN CODE
1.   IF INPUT IS VALID THEN
2.   . SET VALID-SYNTAX RETURN CODE
2.   . UPDATE DFD CURRENT VALUE FOR EQUATION
            LINE OPERATOR
2.   . UPDATE LENGTH BYTE IN EQUATION LINE
            OPERATOR DFD
1.   ENDIF
2.   PASS RETURN CODE BACK TO CALLER
1.   RETURN TO CALLER

END RFIVOPR (VERIFY SYNTAX OF OPERATOR IN
        ARITHMETIC MENU)
            PSEUDOCODE LISTING #7


BEGIN RFIVOPND (VERIFY ARITHMETIC OPERAND
      SYNTAX)
1.    FIND OPERATOR INPUT (RFIFINDI)
1.    IF LENGTH OF OPERATOR INPUT IS NOT ZERO
          THEN
2.    . VERIFY SYNTAX OF FIELD NAME, FIELD
            NUMBER, OR SET SYMBOL (RFIVARCK)
2.    . . IF NOT VALID RETURN CODE FROM RFIVARCK
          THEN
3.    . . VERIFY SYNTAX FOR ARITHMETIC
2.    . ENDIF
2.    . IF SYNTAX IS VALID THEN
3.    . . UPDATE DFD FOR EQUATION-LINE OPERAND
2.    . ENDIF
1.    ENDIF
1.    PASS RETURN CODE BACK TO CALLER
1.    RETURN TO CALLER
END RFIVOPND (VERIFY ARITHMETIC OPERAND
          SYNTAX)
            PSEUDOCODE LISTING #8


BEGIN RFIRFNCK (VERIFY RELATIVE FIELD
      NUMBER)
1.    GET ADDRESS AND LENGTH OF BUFFER FROM
            STACK
1.    SET RETURN CODE TO INVALID
1.    IF LENGTH IS OKAY THEN
2.    . SET RETURN CODE TO VALID
2.    . LOCATE FIRST CHARACTER OF INPUT PAST
            SGG AND UNDERSCORE
2.    . UNTIL END OF INPUT DO
3.    . . IF CHARACTER IS NOT NUMERIC
4.    . . . SET RETURN CODE TO INVALID

3.   . . ENDIF (NOT NUMERIC)

2.   . ENDDO (UNTIL END)

1.   ENDIF (LENGTH OK)

1.   RETURN TO CALLER

END RFIRFNCK (VERIFY RELATIVE FIELD NUMBER

      SYNTAX)

         PSEUDOCODE LISTING #9


BEGIN RFIFINDI (FIND OPERATOR INPUT TO

    MENU MANAGER)

1.   ESTABLISH ADDRESSIBILITY TO PASSED

        SPECIAL CASE VERIFIER CB

1.   GET ADDRESS OF PASSED CONTROL BLOCK FROM

        MMV (IMMVCBN)

1.   IF CALLING ROUTINE IS MENU MANAGER THEN

2.   . GET PROMPT REQUEST CONTROL BLOCK

        ADDRESS FROM MENU BUFFER (IMMRPRM)

1.   ENDIF (CALLED BY MENU MANAGER)

1.   ESTABLISH ADDRESSIBILITY TO PROMPT

        REQUEST BUFFER (OPERATION INPUT CHARS)

1.   PLACE OUTPUT PARAMETERS ON STACK

1.   SET RETURN CODE

1.   RETURN TO CALLER

END RFIFINDI (FIND OPERATOR INPUT TO MM)

        PSEUDOCODE LINSTING #10


BEGIN (TINVARV)

1.   OBTAIN VARIABLE NAME'S CODE PAGE

1.   IF UNRECOGNIZED CODE PAGE THEN

2.   . DEFAULT TO CODE PAGE 256

1.   ENDIF

1.   SET RETURN CODE FOR 'INVALID SYNTAx'

1.   IF CODE PAGE IS VALID (256, 257, 258) THEN

2.   . SET UP POINTER TO EQUATE TABLE

2.   . GET FIRST CHARACTER OF VARIABLE NAME

2.   . IF CHARACTER'S VALUE ABOVE HEX '3F'

      THEN

```
3.    . . PERFORM EQUATE LOOK-UP
3.    . . . IF VALID FIRST CHARACTER
4.    . . . . SET RETURN CODE FOR 'VALID SYNTAX'
4.    . . . . LOAD COUNTER WITH INPUT LENGTH
                    MINUS ONE
4.    . . . . WHILE COUNTER NOT EQUAL TO ZERO DO
5.    . . . . . DECREMENT COUNTER BY ONE
5.    . . . . . GET AN INPUT CHARACTER
5.    . . . . . IF CHARACTER ABOVE HEX '3F' THEN
6.    . . . . . . PERFORM EQUATE LOOK-UP
6.    . . . . . . IF INVALID CHARACTER THEN
7.    . . . . . . . SET RETURN CODE FOR 'INVALID'
                      SYNTAX'
7.    . . . . . . SET COUNTER EQUAL TO ZEO
6.    . . . . . ELSE
7.    . . . . . . IF CHARACTER IS A SPACE OR
                      REQ SPACE THEN
8.    . . . . . . . REPLACE CHARACTER WITH
                      UNDERSCORE
7.    . . . . . . ENDIF
6.    . . . . . ENDIF
5.    . . . . ELSE
6.    . . . . . SET RETURN CODE FOR 'INVALID'
                   SYNTAX'
6.    . . . . . SET COUNTER EQUAL TO ZERO
5.    . . . . ENDIF
4.    . . . ENDDO
3. . . ENDIF
2.    . ENDIF
1.    ENDIF
1.    RETURN
END (TINVARV)
```

PSEUDOCODE LISTING #11


BEGIN RFIVARCK (VARIABLE NAME SYNTAX
       CHECKER)

15

1.  GET POINTER TO AND LENGTH OF BUFFER FROM
        STACK
1.  SET UP INPUT FOR SUBORDINATE CSECT
1.  LOCATE FIRST CHARACTER PAST 8-BYTE SCG
1.  IF FIRST CHARACTER IS AN UNDERSCORE THEN
2.  . INVOKE RFIRFNCK TO VERIFY SYNTAX OF
        RELATIVE FIELD NUMBER
1.  ELSE (FIELD NAME)
2.  . INVOKE TINVARY TO VERIFY SYNTAX FOR
        FIELD NAME
1.  ENDIF
1.  PASS RETURN CODE BACK TO CALLER
1.  RETURN TO CALLER
END RFIVARCK (VARIABLE NAME SYNTAX CHECKER)

PSEUDOCODE LISTING #12

CLAIMS

1. A method for preparing an arithmetic entry in an information processing system which utilizes a display screen, a keyboard and a main store, comprising the steps of :

storing in said main store an arithmetic menu which includes at least an answer item and one or more operand items;

displaying a list of said items on said screen in response to a command received from said keyboard;

displaying a selected parameter on said screen for each of said displayed items wherein each displayed selected parameter is proximate the corresponding displayed item, said step being carried out in response to a command and parameter information received from said keyboard; and

displaying on said screen in a horizontal format, in response to receipt of said parameter information, a plurality of arithmetic elements, said arithmetic elements corresponding respectively to said selected parameters wherein said displayed arithmetic elements illustrate a mathematical relationship between said answer item and said operand items, whereby the information on said display screen includes said arithmetic entry.

2. The method recited in claim 1 wherein said arithmetic menu includes a mathematical operation item.

3. The method recited in claim 2 wherein said selected parameters and the corresponding arithmetic elements for said operand items are represented by the same symbols and wherein said selected parameter for said operation item is represented by a first symbol and the corresponding arithmetic element is represented by a second symbol.

4.  The method recited in claim 1, 2 or 3 wherein said arithmetic elements are displayed on said screen below both said list of items and said selected parameters.

5.  The method recited in any one of claims 1 to 4 wherein the arithmetic element corresponding to said answer items is separated by an "equal" symbol from the remainder of said arithmetic elements.

# FIG. 1

# FIG. 2

20 — WHILE CREATING A DOCUMENT THE OPERATOR PRESSES INSTRUCTION KEY

22 — SYSTEM DISPLAYS INSTRUCTION MENU

SEE : TINITKP

24 — OPERATOR CHOOSES ARITHMETIC MENU

26 — SYSTEM DISPLAYS ARITHMETIC MENU

SEE : TINITKP, RFILINST, RFIARITH

28 — OPERATOR FILLS IN MENU

SEE : RFIFOPND, RFISOPND, RFIVANS, RFIVOPR, RFIVOPND

30 — SYSTEM CREATES ARITHMETIC INSTRUCTION IN TEXT DOCUMENT

# FIG. 3

```
DISK01|_____|_____|_____|_____|Kyb  1   |_____
```

|  | 34 | ARITHMETIC 36 | 38 |
|----|------|------|------|
| ID | ITEM | YOUR CHOICE | POSSIBLE CHOICES |
| a | Answer | Annual_Interest | Name of a Variable |
| b | Operand | Principal_Amount | Name of a Variable, or a Number |
| c | Operation | 3 | 1 = Plus (+)   2 = Minus (-)<br>3 = Times(*)   4 = Divided by (/) |
| d | Operand | Rate | Name of a Variable, or a Number |

```
.......a........ = .........b........ c .........d........
Let Annual_Interest  = Principal_Amount * Rate
```
} 40

```
Type ID letter to choose ITEM; press  ENTER:x
```
} 42

2/2

0066052

0066052

# EUROPEAN SEARCH REPORT

European Patent Office

Application number

EP 82 10 2513

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 478 326 (BOURGHARDT)<br>* Column 1, line 18 - column 1, line 29; column 1, line 58 - column 2, line 31 * & GB - A - 1 016 557<br><br>--- | 1 | G 06 F 15/20 |
| A | FR-A-2 385 136 (PHILIPS)<br>* Page 2, line 31 - page 3, line 23; claim 1 *<br><br>----- | 1 | |

TECHNICAL FIELDS SEARCHED (Int. Cl. ³)

G 06 F 15/20
G 06 F 3/02

The present search report has been drawn up for all claims

| Place of search | Date of completion of the search | Examiner |
|---|---|---|
| THE HAGUE | 01-09-1982 | BARRACO G.S. |